(19) Europäisches Patentamt
European Patent Office
Office européen des brevets

(11) **EP 4 439 386 A1**

(12) **EUROPEAN PATENT APPLICATION**

(43) Date of publication:
**02.10.2024 Bulletin 2024/40**

(21) Application number: **23165823.8**

(22) Date of filing: **31.03.2023**

(51) International Patent Classification (IPC):
**G06N 3/045** (2023.01)          **G06N 3/0895** (2023.01)
**G06N 3/096** (2023.01)

(52) Cooperative Patent Classification (CPC):
**G06N 3/045; G06N 3/0895; G06N 3/096**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.03.2023 NL 2034477**

(71) Applicant: **NavInfo Europe B.V.**
**5657 DB Eindhoven (NL)**

(72) Inventors:
• **BHAT, Prashant Shivaram**
  **5657 DB Eindhoven (NL)**
• **RENJITH, Bharath**
  **5657 DB Eindhoven (NL)**
• **ARANI, Elahe**
  **5657 DB Eindhoven (NL)**
• **ZONOOZ, Bahram**
  **5657 DB Eindhoven (NL)**

(74) Representative: **van Breda, Jacobus**
**Octrooibureau Los & Stigter B.V.**
**P.O. Box 20052**
**1000 HB Amsterdam (NL)**

(54) **A COMPUTER IMPLEMENTED METHOD FOR CONTINUAL LEARNING OF A PLURALITY OF TASKS**

(57) A computer implemented method for continual learning of a plurality of tasks using a machine learning model comprising a deep neural network and a, preferably compact, shared task-attention module, wherein each task is associated with a mutually different learnable task-specific token comprising:
- rehearsing learned knowledge in the deep neural network to prevent the forgetting of previous tasks;

- transforming latent representations of the shared task-attention module towards a task distribution, using the learnable task-specific tokens, so that memory and computational use is limited, such as substantially insignificant;
- using the task-specific tokens to reduce task interference and facilitate within-task and task-id prediction by the deep neural network.

Fig. 1

EP 4 439 386 A1

**Description**

The present invention pertains to the field of artificial intelligence and specifically addresses the issue of catastrophic forgetting (CF) encountered by deep neural networks (DNNs) deployed in the real world. In real world deployment DNNs need to learn sequentially with data becoming progressively available over time, a process known as continual learning (CL) or incremental learning over a sequence of tasks [1]. However, CF is a phenomenon in which acquiring new information disrupts the consolidated knowledge, and, in the worst case, previously acquired information is completely forgotten [2,9]. There are two settings in which CL is largely studied: class incremental learning (Class-IL) and task incremental learning (Task-IL) [10] . In both settings, models are trained sequentially learning tasks with each task consisting of novel classes. However, during inference, Task-IL setting provides the task labels along with the samples making it easier for the model to predict.

**Rehearsal-based approaches** have been utilized to combat catastrophic forgetting in continual learning (CL) by explicitly storing and replaying previous task samples through Experience-Rehearsal (ER) [9]. Soft targets, which capture complex similarity patterns in data, have been found to carry more information compared to hard targets [5]. Therefore, knowledge distillation has been explored to improve generalization [24,25,26,27,30] in Deep Neural Networks (DNNs) and has also been applied to CL. DER++ [4] enforces consistency in predictions through regularization of the function space, while CLS-ER [3] employs multiple semantic memories to better handle the stability-plasticity trade-off. Recent works focus on reducing representation drift right after task switching to mitigate forgetting. ER-ACE [16] shields learned representations from drastic adaptations while accommodating new information through asymmetric update rules, and Co2L [18] employs contrastive representation learning to learn robust features that are less susceptible to catastrophic forgetting. However, under low-buffer regimes, these approaches are prone to overfitting and exacerbated representation drift.

Under low-buffer regimes, the quality of buffered samples plays a significant role in defining the ability of the CL model to approximate past behavior. GCR [17] proposes a core set selection mechanism that approximates the gradients of the data seen so far to select and update the memory buffer. In contrast, DRI [14] employs a generative replay to augment the memory buffer under low buffer regimes. Although reasonably successful in many CL scenarios, rehearsal-based approaches lack task-specific parameters and run the risk of shared parameters being overwritten by later tasks.

**Evolving architectures,** which segregate weights per task, are an attractive alternative to rehearsal-based approaches to reduce catastrophic forgetting in CL. Dynamic sparse parameter isolation approaches (e.g., NISPA [6], CLNP [12], PackNet [13]) leverage overparameterization of DNNs and learn sparse architecture for each task within a fixed model capacity. However, these approaches suffer from capacity saturation and fail miserably in longer task sequences. By contrast, some parameter-isolation approaches grow in size to accommodate new tasks with least forgetting. Progressive Neural Networks (PNNs; [15]) propose a growing architecture with lateral connections to previously learned features to simultaneously reduce forgetting and enable forward transfer. However, PNNs instantiate a new subnetwork for each task, rendering them quickly unscalable. Approaches such as CPG [19] and PAE [20] grow drastically slower than PNN, but require task identity at inference. Due to the limitations mentioned above, evolving architectures have been largely limited to the Task-IL setting.

**Task attention** has been utilized in several works to minimize interference between tasks. In vision transformers, DyToX [22] modified the final multi-head self-attention layer to act as a task attention block using task tokens. However, DyToX is an ad hoc approach for vision transformers and therefore not applicable to other architectures, such as convolutional networks. On the contrary, HAT [23] employed a task-based layer-wise hard attention mechanism in fully connected or convolutional networks to reduce interference between tasks. However, layer-wise attention is quite cumbersome as compared to global attention mechanisms. TAMiL [31] proposed to use task-specific attention modules to capture task-specific information from the common representation space. However, TAMiL adds a new task attention module for every new task learned whereas the current invention uses a compact, shared task attention module while adding new task token for every new task learned.

To address the issue of CF, various approaches have been proposed, such as parameter isolation methods [6,12,13] and rehearsal-based methods [3,4,7,8,28,29]. Parameter isolation methods allocate different sets of parameters, either by using a subset of parameters within a fixed capacity model or expanding the model size to learn a new task. These methods use task labels during inference to identify the right set of parameters and are thus limited to Task-IL. Rehearsal-based methods store a subset of samples from previous tasks in a buffer and replay them alongside current task samples to combat forgetting. These methods do not require task labels and are fairly successful in Class-IL. However, they still struggle with establishing clear boundaries between classes of current and previous tasks and suffer from task interference.

Class-IL is essentially composed of two subproblems: task-id prediction (TP) and within-task prediction (WP) [11]. TP involves identifying the task of a given sample, while WP refers to making predictions for a sample within the classes of the task identified by TP.

Regardless of whether the CL algorithm defines it explicitly or implicitly, good TP and good WP are necessary and sufficient to ensure good Class-IL performance. Task interference adversely affects both WP and TP.

As such, there is a need to obviate such adverse effects.

It is additionally noted that CL on a sequence of tasks with non-stationary data distributions results in catastrophic forgetting of older tasks as the newly acquired information interferes with previously consolidated knowledge. Rehearsal-based approaches that maintain a bounded memory buffer currently fail to perform well under so called low-buffer regimes due to repeated training on a limited set of buffer samples. This causes so called task interference in which the DNN incorrectly approximates class boundaries. Parameter isolation methods, may also be employed, which largely limit task interference. However, Parameter isolation methods suffer from so called capacity saturation and/or scalability issues in longer task sequences and are only limited to Task-IL.

As such, there is a need to augment rehearsal-based learning.

Accordingly, the present invention proposes a rehearsal-based CL method that encompasses task-attention to facilitate a good WP and TP by reducing interference between tasks, all while focusing on the information relevant to the current task, in a plurality of subsequent tasks, to facilitate more accurate TP and WP by filtering out extraneous or interfering information. The use of a shared task-attention module and task-specific tokens here can be used to leverage parameter isolation for reduced task interference.

To this end there is provided a computer implemented method for continual learning of a plurality of tasks using a machine learning model comprising a deep neural network and a, preferably compact, shared task-attention module, such as without adding a new attention module for a new tasks and without forming a multi-head task-attention layer, wherein each task is associated with a mutually different learnable task-specific token comprising:

- rehearsing learned knowledge in the deep neural network to prevent the forgetting of previous tasks;
- transforming latent representations of the shared task-attention module towards a task distribution, using the learnable task-specific tokens, so that preferably memory and computational overhead are limited, such as substantially insignificant;
- using the task-specific tokens to reduce task interference and facilitate within-task and task-id prediction by the deep neural network.

We are trying to say the additionally memory and computation introduced by these specific features in the method are limited. However the entire method in itself takes significant memory and computation. So, the term "overhead" is typically used in the industry to convey that. In one example, the memory and computational requirement of the machine learning model does not significantly grow over the course of its learning new tasks. Other applications exist which do. In one particularly practical implementation the model can be installed in a computer system of a vehicle, such as an at least partially autonomous vehicle, comprising at least one camera, wherein model is used to learn tasks associated with information, such as the images, obtained from the at least one camera, such as the detection and/or identification of traffic signs, road conditions and/or weather conditions,

and/or wherein tasks comprise the recognition of danger or impending danger, and
optionally alerting a driver or performing an action, such as a speed correction, an evasive maneuver, a halting of the vehicle, and/or issuing an alert in response to the images from said at least one camera.

The method may comprise maintaining a memory buffer $D_m$, such as comprising samples of image information from the camera, that represents all previously seen tasks in said continual learning.

In yet another option the model comprises only one output layer that is designed to handle an increasing number of classes over time.

A further option is presented by the method using an exponential moving average of the model for inference. That is to say, the weights of the model, and the exponential moving average of said weights.

Yet the invention may grow more effective still in that the shared task-attention module may comprise a feature encoder, a feature selector, and a task classifier, wherein the feature encoder is represented by a linear layer followed by Sigmoid activation, wherein the feature selector is represented by another linear layer with Sigmoid activation, and wherein the linear classifier is used to orient attention to the current task of the plurality of tasks.

Additionally, the method may comprise the use of an auxiliary task classification.

More still can be pointed for improving the method such as an option wherein the shared task-attention module uses the output of the deep neural network and a corresponding task token of the task-specific tokens as its inputs.

The method may further also comprise expanding the parameter space by adding new task tokens.

According to a second aspect of the invention there is provided a data processing apparatus comprising means for carrying out the method.

According to a third aspect of the invention there is provided a computer program product comprising instructions which, when the program is executed by a computer, cause the computer to carry out the method.

According to a fourth aspect of the invention there is provided an at least partially autonomous driving system, such as a vehicle, comprising at least one camera designed for providing a feed of images, and a computer programmed to execute the method, and wherein system continuously learns new tasks based on the feed of images, and wherein such tasks comprise the detection and/or identification of at least one of traffic signs, road conditions, weather conditions and traffic situations, and wherein optionally

the system being arranged for alerting a user or performing an action, such as a speed correction, an evasive maneuver, a halting of the vehicle, and/or issuing an alert in response to the images from said at least one camera.

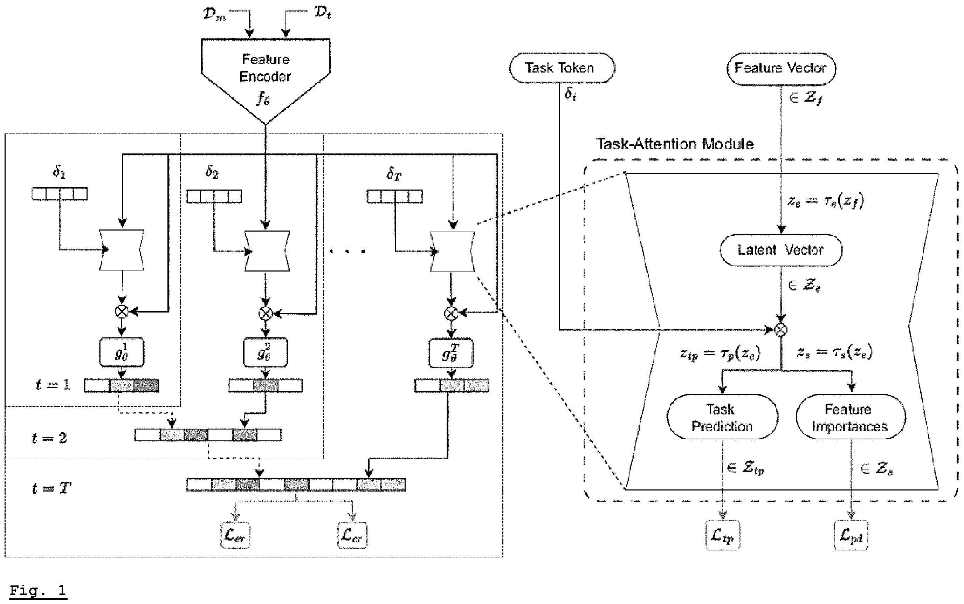

The invention will hereinafter be described in more detail, and in reference to Figure 1.

Figure 1 shows a schematic representation of the flow of a computer implemented method for continual learning.

It is pointed out that data for the model may be obtained from images of a camara mounted to a vehicle, such as an at least partially autonomous vehicle. Tasks learned may be associated with the detection and/or identification of traffic signs, road conditions and/or weather conditions. Alternatively, and also separately from this example the method according to the invention may comprise using data from a sensor, such as radar or lidar, to detect the presence of and/or identify a real world object. Optionally, any detection and/or identification can be passed on to a user via a human interface, or be used to enact an automated response by the computer implementing the mode. In the case of a vehicle this computer could be the computer controlling said vehicle, which could enact automatic breaking, the adjustment of speed, or issuing an audio and/or visual alert.

In this example the method involves sequential tasks $t \in \{1, 2, .., T\}$ and classes $j \in \{1, 2, ... , J\}$ per task, with data appearing over time. Each task is associated with a task-specific data distribution $(X_{t,j}, Y_{t,j}) \in D_t$. For the purpose of the invention there two CL scenarios may be considered, Class-IL and Task-IL. The CL model according to the invention $\Phi_\theta = \{f_\theta, \tau_\theta, \delta_\theta, g_\theta\}$ comprises a backbone network $f_\theta$, such as an ResNet-18, a shared attention module $\tau_\theta$, a single expanding head $g_\theta = \left\{ g_\theta^i \mid i \leq t \right\}$ representing all classes for all tasks, and a set of task tokens up to the current task $\delta_\theta = \{\delta_i | i \leq t\}$.

The single expanding head $g_\theta$ also separately from this example is a single output layer that is designed to handle an increasing number of classes over time, meaning that the model can be trained on multiple tasks without needing to be completely retrained. The term "expanding" is used, because instead of adding a completely new output layer for each new class, the existing output layer may be 'expanded' to include the new class. This can optionally be done by adding additional nodes, also known as neurons, to the existing layer, or by adjusting the weights and biases of the head to handle new classes. Overall, the goal of the expanding head is to create a flexible and efficient model that can handle a large and continuously growing set of classes, without needing to be completely retrained or rebuilt every time a new class is introduced.

Training DNNs sequentially has remained a daunting task since acquiring new information significantly deteriorates the performance of previously learned tasks. Therefore, to better preserve the information from previous tasks, the present invention seeks to maintain a memory buffer $D_m$ that represents all previously seen tasks. To this end the method employs reservoir sampling [21] to update $D_m$ throughout CL training. At each iteration, a mini-batch from both $D_t$ and $D_m$, is sampled and the CL model $\Phi_\theta$ is updated using experience rehearsal as follows:

$$\mathcal{L}_{er} = \mathop{\mathbb{E}}_{(x_i, y_i) \sim \mathcal{D}_t} \left[ \mathcal{L}_{ce}(\sigma(\Phi_\theta(x_i)), y_i) \right]$$
$$+ \alpha \mathop{\mathbb{E}}_{(x_k, y_k) \sim \mathcal{D}_m} \left[ \mathcal{L}_{ce}(\sigma(\Phi_\theta(x_k)), y_k) \right]$$
$$Equation\ 1$$

In Equation 1 $\sigma(.)$ is a softmax function and $\mathcal{L}_{ce}$ is a cross-entropy loss. The learning objective for ER in Equation 1 promotes plasticity through the supervisory signal from $D_t$ and improves stability through $D_m$. Therefore, the buffer size ($|D_m|$) is critical to maintaining the right balance between stability and plasticity in the ER. In scenarios where buffer size is limited ($|D_t| \gg |D_m|$) due to memory constraints and/or privacy reasons, repeatedly learning from the constrained buffer leads to overfitting on the buffered samples. As CL training progresses, soft targets (model predictions) carry more information per training sample than hard targets (ground truths) [5]. Therefore, in addition to ground truth labels, soft targets can be leveraged to better preserve the knowledge of the previous tasks. Consistency regularization has traditionally been used to enforce consistency in the predictions either by storing the past predictions in the buffer or by employing an exponential moving average (EMA) of the weights of the CL model. Following [3, 8, 28], the example according to Figure 1 further employs an EMA of the weights of the CL model to enforce consistency in the predictions as follows:

$$\mathcal{L}_{cr} \triangleq \mathop{\mathbb{E}}_{(x_k, y_k) \sim D_m} \left\| \Phi_{\theta_{EMA}}(x_k) - \Phi_\theta(x_k) \right\|_F^2$$

In Equation 2 $\| \quad \|_F^2$ is the so called Frobenius norm, $\Phi_{\theta EMA}$ is the EMA of model $\Phi_\theta$.

The EMA can be updated as follows:

$$\theta_{EMA} = \begin{cases} \eta\, \theta_{EMA} + (1 - \eta)\,\theta, & \text{if } \zeta \geq \mathcal{U}(0, 1) \\ \theta_{EMA}, & \text{otherwise} \end{cases}$$
$$Equation\ 3$$

In Equation 3 $\eta$ is a decay parameter, $\zeta$ is an update rate, and $\theta$ and $\theta_{EMA}$ are the weights of the CL model $\Phi_\theta$ and the EMA of these weights respectively $\Phi_{\theta EMA}$. As the knowledge of the previous tasks is encoded in the weights $\theta$ of the CL model $\Phi_\theta$, the EMA is used for inference instead of the CL model $\Phi_\theta$ as it serves as a proxy for self-ensemble of models specialized in different tasks.

Hereinafter the task-attention module will be discussed.

In this example a shared, compact, task-attention module to attend to features important for the current task is used. This results in additional improvement of task-id prediction (TP) and within-task prediction (WP). This shared task-attention module is used alternative to so called 'multi-head self-attention' in vision transformers.

The attention module, denoted as $\tau_\theta$ = {$\tau^e$, $\tau^s$, $\tau^{tp}$}, comprises a feature encoder, $\tau^e$, a feature selector, $\tau^s$, and a task classifier, $\tau^{tp}$. The feature encoder is represented by a linear layer followed by Sigmoid activation, while the feature selector is represented by another linear layer with Sigmoid activation. A linear classifier $\tau^{tp}$ is used to orient attention to the current task being learned by the model. Orienting, also separately from this example, here means that the linear classifier predicts a corresponding task for a given sample. It is to be understood that a given sample may refer to stored visual data sample which is used as input for the model. Such data sample can be drawn from the buffer memory or taken from a vehicle mounted camera.

The output activation of the encoder $f_\theta$ is denoted as $z_f \in \mathbb{R}^{b \times N_f}$, $\tau^e$ as $z_e \in \mathbb{R}^{b \times N_e}$, $\tau^s$ as $z_s \in \mathbb{R}^{b \times N_s}$, and that of $\tau^{tp}$ as $z_{tp} \in \mathbb{R}^{b \times N_{tp}}$, where $N_f$, $N_e$, $N_s$, and $N_{tp}$ are the dimensions of the output Euclidean spaces, and $b$ is the batch size.

To further reduce interference between tasks and exploit task-specific features, the attention module can be equipped with a learnable task token $\delta_i$ associated with each task. Each $\delta_i \in \mathbb{R}^{1 \times N_e}$ is a lightweight $N_e$-dimensional randomly initialized vector, learnable during the corresponding task training and then fixed for the rest of the continual learning training.

During continual learning training, for any sample $\in D_t \cup D_m$, the incoming features $z_f$ and the corresponding task token $\delta_t$ are processed by the attention module as follows:

$$z_e = \tau^e(z_f)$$
$$z_s = \tau^s(z_e \otimes \delta_t)$$
$$z_{tp} = \tau^{tp}(z_e \otimes \delta_t)$$
$$Equation\ 4$$

In other words, the attention module is designed to first project the features onto a common latent space, which are then transformed using a corresponding task token. Given that each task is associated with a task-specific token these tokens are intended to capture taskspecific transformation coefficients.

To further encourage task-specificity in task-tokens, for the purpose of attention-guided incremental learning (AGILE) may make use of an auxiliary task classification:

$$\mathcal{L}_{tp} = \mathop{\mathbb{E}}_{(x,y) \sim \mathcal{D}_t} \left[ \mathcal{L}_{ce}(\sigma(z_{tp}), y^t) \right]$$

In Equation 5 $y^t$ is the ground truth of the task label.

Hereinafter network expansion will be discussed.

The shared attention module has two inputs: the encoder output $z_f$ and the corresponding task token $\delta_i$. As the number of tasks evolves during CL training, the parameter space, also known as the set of all possible values for the parameters that define the shared attention module also comprising the task tokens, by adding new task tokens commensurately. These tokens may be sampled from a truncated normal distribution with values outside [-2, 2] and redrawn until they are within the bounds. Thus, in task $t$ there are $\{\delta_1, \delta_2, .., \delta_t\}$ tokens. For each sample, AGILE performs as many forward passes through the attention module as the number of seen tasks and generates as many feature importances ($\in \mathbf{R}^{b \times t \times N_s}$) (see Figure 1). To encourage the diversity among these feature importances a pairwise discrepancy loss may be employed as follows:

$$\mathcal{L}_{pd} = \sum_{i=1}^{t-1} \mathop{\mathbb{E}}_{(x,y) \sim \mathcal{D}_t} \left\| \sigma(z_s^t) - stopgrad(\sigma(z_s^i)) \right\|_1$$

*Equation 6*

In Equation 6 $z_s^i$ is a feature importance generated with the help of the task token $\delta_i$. Since there are multiple feature importances, selecting the right feature importance is non-trivial for longer task sequences. Therefore, it is proposed to expand $g_\theta = \{g_\theta^i\} \forall i \le t$ with task-specific classifiers. Each $g_\theta^i$ takes corresponding feature importance $z_s^i$ and the encoder output $z_f$ as input and returns predictions for classes belonging to the corresponding task. In the method all the outputs from task-specific classifiers are concatenated and the final learning objective is computed as follows:

$$\mathcal{L} = \mathcal{L}_{er} + \beta \mathcal{L}_{cr} + \gamma \mathcal{L}_{tp} + \lambda \mathcal{L}_{pd}$$

*Equation 7*

In Equation 7 $\beta$, $\gamma$, and $\lambda$ are all hyperparameters. At the end of each task, we freeze the learned task token and its corresponding classifier. Figure 1 depicts our proposed approach, which is detailed in computer program 1 and 2.

| Proposed Method: AGILE |
| --- |

**Input:** Data streams $\mathcal{D}_t$, Model $\Phi_\theta = \{f_\theta, \tau_\theta, \delta_\theta, g_\theta\}$, Hyperparameters $\alpha, \beta, \gamma, \lambda$, Memory buffer $\mathcal{D}_m \leftarrow \{\}$

**for all** tasks $t \in \{1, 2, .., T\}$ **do**

    **for all** epochs $e \in \{1, 2, .., E\}$ **do**

        Sample a minibatch $\{x_j, y_j\}_{j=1}^N \in \mathcal{D}_t$

        $\hat{y}_j, z_{sj}, z_{tpj} = \text{TASKATTENTION}(x_j)$

        $\mathcal{L} = \gamma\mathcal{L}_{tp} + \lambda\mathcal{L}_{pd}$

        **if** $\mathcal{D}_m \neq \emptyset$ **then**

            Sample a minibatch $\{x_k, y_k\}_{k=1}^N \in \mathcal{D}_m$

            $\hat{y}_k, z_{sk}, z_{tpk} = \text{TASKATTENTION}(x_k)$

        **end if**

        $\mathcal{L}\ += \mathcal{L}_{er} + \beta\mathcal{L}_{cr}$

        Update $\Phi_\theta$ and $\mathcal{D}_m$

        Update $\theta_{EMA}$

    **end for**

**end for**

**Return:** model $\Phi_\theta$

*Program 1*

---

## Task-Attention

**function** TASKATTENTION $(x)$

$z_f = f_\theta(x)$

**for all** $i \leq t$ **do**

$z_e^i = \tau^e(z_f)$

$z_s^i, z_{tp} = \tau^s(z_e^i \otimes \delta_i) , \tau^{tp}(z_e^i \otimes \delta_i)$

$\hat{y}^i = g^i(z_s^i \otimes z_f)$

**end for**

$\hat{y}_j = concat(\hat{y}_j^i; \ \forall i \leq t)$

**return** $\hat{y}, z_s, z_{tp}$

**end function**

---

*Program 2*

Typical application areas of the invention include, but are not limited to:

- Road condition monitoring
- Road signs detection
- Parking occupancy detection
- Defect inspection in manufacturing
- Insect detection in agriculture
- Aerial survey and imaging

Although the invention has been discussed in the foregoing with reference to an exemplary embodiment of the method of the invention, the invention is not restricted to this particular embodiment which can be varied in many ways without departing from the invention. The discussed exemplary embodiment shall therefore not be used to construe the appended claims strictly in accordance therewith. On the contrary the embodiment is merely intended to explain the wording of the appended claims without intent to limit the claims to this exemplary embodiment. The scope of protection of the invention shall therefore be construed in accordance with the appended claims only, wherein a possible ambiguity in the wording of the claims shall be resolved using this exemplary embodiment.

Variations and modifications of the present invention will be obvious to those skilled in the art and it is intended to cover in the appended claims all such modifications and equivalents. The entire disclosures of all references, applications, patents, and publications cited above are hereby incorporated by reference. Unless specifically stated as being "essential" above, none of the various components or the interrelationship thereof are essential to the operation of the invention. Rather, desirable results can be achieved by substituting various components and/or reconfiguration of their relationships with one another.

Optionally, embodiments of the present invention can include a general or specific purpose computer or distributed system programmed with computer software implementing steps described above, which computer software may be in any appropriate computer language, including but not limited to C++, FORTRAN, ALGOL, BASIC, Java, Python, Linux, assembly language, microcode, distributed programming languages, etc. The apparatus may also include a plurality of such computers/distributed systems (e.g., connected over the Internet and/or one or more intranets) in a variety of hardware implementations. For example, data processing can be performed by an appropriately programmed microprocessor, computing cloud, Application Specific Integrated Circuit (ASIC), Field Programmable Gate Array (FPGA), or the like, in conjunction with appropriate memory, network, and bus elements. One or more processors and/or microcontrollers can operate via instructions of the computer code and the software is preferably stored on one or more tangible non-transitive memory-storage devices.

**References:**

1. Parisi, German I., et al. "Continual lifelong learning with neural networks: A review." Neural Networks 113 (2019): 54-71.

2. Michael McCloskey and Neal J Cohen. "Catastrophic interference in connectionist networks: The sequential learning problem." In Psychology of learning and motivation, volume 24, pages 109-165. Elsevier, 1989. 1, 2

3. Arani, Elahe, Fahad Sarfraz, and Bahram Zonooz. "Learning Fast, Learning Slow: A General Continual Learning Method based on Complementary Learning System." In International Conference on Learning Representations.

4. Buzzega, Pietro, Matteo Boschini, Angelo Porrello, Davide Abati, and Simone Calderara. "Dark experience for general continual learning: a strong, simple baseline." Advances in neural information processing systems 33 (2020): 15920-15930.

5. Bhat, Prashant Shivaram, Bahram Zonooz, and Elahe Arani. "Consistency is the key to further mitigating catastrophic forgetting in continual learning." In Conference on Lifelong Learning Agents, pp. 1195-1212. PMLR, 2022.

6. Gurbuz, Mustafa B., and Constantine Dovrolis. "NISPA: Neuro-Inspired Stability-Plasticity Adaptation for Continual Learning in Sparse Networks." In International Conference on Machine Learning, pp. 8157-8174. PMLR, 2022.

7. Bhat, Prashant Shivaram, Bahram Zonooz, and Elahe Arani. "Task Agnostic Representation Consolidation: a Self-supervised based Continual Learning Approach." In Conference on Lifelong Learning Agents, pp. 390-405. PMLR, 2022.

8. Sarfraz, Fahad, Elahe Arani, and Bahram Zonooz. "SYNERgy between SYNaptic consolidation and Experience Replay for general continual learning." In Conference on Lifelong Learning Agents, pp. 920-936. PMLR, 2022.

9. Ratcliff, Roger. "Connectionist models of recognition memory: constraints imposed by learning and forgetting functions." Psychological review 97.2 (1990): 285.

10. Van de Ven, Gido M., and Andreas S. Tolias. "Three scenarios for continual learning." arXiv preprint arXiv:1904.07734 (2019).

11. Kim, Gyuhak, Changnan Xiao, Tatsuya Konishi, Zixuan Ke, and Bing Liu. "A Theoretical Study on Solving Continual Learning." In Advances in Neural Information Processing Systems.

12. Golkar, Siavash, Micheal Kagan, and Kyunghyun Cho. "Continual Learning via Neural Pruning." In Real Neurons {\&} Hidden Units: Future directions at the intersection of neuroscience and artificial intelligence@ NeurIPS 2019.

13. Mallya, Arun, and Svetlana Lazebnik. "Packnet: Adding multiple tasks to a single network by iterative pruning." In Proceedings of the IEEE conference on Computer Vision and Pattern Recognition, pp. 7765-7773. 2018.

14. Wang, Zhen, Liu Liu, Yiqun Duan, and Dacheng Tao. "Continual learning through retrieval and imagination." In AAAI Conference on Artificial Intelligence, vol. 8. 2022.

15. Rusu, Andrei A., Neil C. Rabinowitz, Guillaume Desjardins, Hubert Soyer, James Kirkpatrick, Koray Kavukcuoglu, Razvan Pascanu, and Raia Hadsell. "Progressive Neural Networks." arXiv e-prints (2016): arXiv-1606.

16. Caccia, Lucas, Rahaf Aljundi, Nader Asadi, Tinne Tuytelaars, Joelle Pineau, and Eugene Belilovsky. "New insights on reducing abrupt representation change in online continual learning." arXiv preprint arXiv:2203.03798 (2022).

17. Tiwari, Rishabh, Krishnateja Killamsetty, Rishabh Iyer, and Pradeep Shenoy. "GCR: Gradient Coreset Based Replay Buffer Selection For Continual Learning." In Proceedings of the IEEE/CVF Conference on Computer Vision and Pattern Recognition, pp. 99-108. 2022.

18. Cha, Hyuntak, Jaeho Lee, and Jinwoo Shin. "Co2l: Contrastive continual learning." In Proceedings of the IEEE/CVF International Conference on Computer Vision, pp. 9516-9525. 2021.

19. Hung, Ching-Yi, Cheng-Hao Tu, Cheng-En Wu, Chien-Hung Chen, Yi-Ming Chan, and Chu-Song Chen. "Compacting, picking and growing for unforgetting continual learning." Advances in Neural Information Processing Systems 32 (2019).

20. Hung, Ching-Yi, Cheng-Hao Tu, Cheng-En Wu, Chien-Hung Chen, Yi-Ming Chan, and Chu-Song Chen. "Compacting, picking and growing for unforgetting continual learning." Advances in Neural Information Processing Systems 32 (2019).

21. Vitter, Jeffrey S. "Random sampling with a reservoir." ACM Transactions on Mathematical Software (TOMS) 11.1 (1985): 37-57.

22. Douillard, Arthur, Alexandre Ramé, Guillaume Couairon, and Matthieu Cord. "Dytox: Transformers for continual learning with dynamic token expansion." In Proceedings of the IEEE/CVF Conference on Computer Vision and Pattern Recognition, pp. 9285-9295. 2022.

23. Serra, Joan, Didac Suris, Marius Miron, and Alexandros Karatzoglou. "Overcoming catastrophic forgetting with hard attention to the task." In International Conference on Machine Learning, pp. 4548-4557. PMLR, 2018.

24. Gowda, S., Zonooz, B. & Arani, E.. (2022). "InBiaseD: Inductive Bias Distillation to Improve Generalization and Robustness through Shape-awareness." Proceedings of The 1st Conference on Lifelong Learning Agents, in Proceedings of Machine Learning Researc 199:1026-1042

25. Bhat, Prashant, Elahe Arani, and Bahram Zonooz. "Distill on the Go: Online knowledge distillation in self-supervised learning." In Proceedings of the IEEE/CVF Conference on Computer Vision and Pattern Recognition, pp. 2678-2687. 2021.

26. Zonooz, Bahram, Fahad Sarfraz, and Elahe Arani. "Method for training a robust deep neural network model." U.S. Patent Application 17/107,455, filed June 3, 2021.

27. Arani, Elahe, Fahad Sarfraz, and Bahram Zonooz. "Computer-Implemented Method of Training a Computer-Implemented Deep Neural Network and Such a Network." U.S. Patent Application 17/382,121, filed February 10, 2022.

28. Sarfraz, Fahad, Elahe Arani, and Bahram Zonooz. "Sparse Coding in a Dual Memory System for Lifelong Learning." arXiv preprint arXiv:2301.05058 (2022).

29. Varma, Arnav, Elahe Arani, and Bahram Zonooz. "Dynamically Modular and Sparse General Continual Learning." arXiv preprint arXiv:2301.00620 (2023).

30. Gowda, Shruthi, Bahram Zonooz, and Elahe Arani. "Does Thermal data make the detection systems more reliable?." arXiv preprint arXiv:2111.05191 (2021).

31. Prashant Shivaram Bhat, Bahram Zonooz, and Elahe Arani. "Task-Aware Information Routing from Common Representation Space in Lifelong Learning." . In The Eleventh International Conference on Learning Representations .2023.

**Claims**

1. A computer implemented method for continual learning of a plurality of tasks using a machine learning model ($\Phi_\theta = \{f_\theta, \tau_\theta, \delta_\theta, g_\theta\}$) comprising a deep neural network ($f_\theta$) and a, preferably compact, shared task-attention module ($\tau_\theta$), wherein each task is associated with a mutually different learnable task-specific token ($\delta_\theta$), the method comprising:

   - rehearsing learned knowledge in the deep neural network ($f_\theta$) to prevent the forgetting of previous tasks;
   - transforming latent representations of the shared task-attention module towards a task distribution, using the learnable task-specific tokens;
   - using the task-specific tokens ($\delta_\theta$) to reduce task interference and facilitate within-task and task-id prediction by the deep neural network

   wherein the model comprises an output layer ($g_\theta$) that is designed to handle an increasing number of classes overtime.

2. The method according to claim 1, wherein the output layer is only one output layer and the only one in said model.

3. The method according to claim 1 or 2, wherein the model is installed in a computer system of a vehicle, such as an at least partially autonomous vehicle, comprising at least one camera, wherein the model continuously learns tasks associated with information, such as the images, obtained from the at least one camera, such as the detection and/or identification of traffic signs, road conditions and/or weather conditions, and/or wherein tasks comprise the recognition of danger or impending danger, and optionally alerting a driver or performing an action, such as a speed correction, an evasive maneuver, a halting of the vehicle, and/or issuing an alert in response to the images from said at least one camera.

4. The method according to claim 1, 2 or 3, comprising:

   - maintaining a memory buffer $D_m$, such as comprising samples of image information from the camera of claim 3, such that all previously seen tasks in said continual learning are represented therein.

5. The method according to any of the preceding claims, wherein the output layer is expanded with task-specific classifiers, wherein each task-specific classifier takes corresponding feature importance and encoder output as input and returns predictions for classes belonging to the corresponding task, and wherein optionally, all the outputs from task-specific classifiers are concatenated and a final learning objective is computed.

6. The method according to any one of claims 1-5, comprising:

- using an exponential moving average ($\Phi_{\theta EMA}$) of the model ($\Phi_\theta$) for inference.

7.  The method according to any one of claims 1-6, wherein the shared task-attention module($\tau_\theta$), comprises

    a feature encoder ($\tau^e$),
    a feature selector ($\tau^s$), and
    a task classifier ($\tau^{tp}$),
    wherein the feature encoder is represented by a linear layer followed by Sigmoid activation,
    wherein the feature selector is represented by another linear layer with Sigmoid activation, and
    wherein the classifier is used to orient attention to the current task of the plurality of tasks.

8.  The method according to claim 7, comprising the use of an auxiliary task classification.

9.  The method according to any one of claims 1-8, wherein the shared task-attention module ($\tau_\theta$) uses the output ($z_f$) of the deep neural network ($f_\theta$) and a corresponding task token ($\delta_i$) of the task-specific tokens ($\delta_\theta$) as its inputs, wherein the method optionally comprises:

    - expanding the parameter space by adding new task tokens.

10. A data processing apparatus comprising means to and programmed for carrying out the method of any one of claims 1-9.

11. A computer program product comprising instructions which, when the program is executed by a computer, cause the computer to carry out the method of any one of claims 1-9.

12. An at least partially autonomous driving system, such as a vehicle, comprising at least one camera designed for providing a feed of images, and a computer programmed to execute the method according to any one of claims 1-9, and wherein system continuously learns new tasks based on the feed of images, and wherein such tasks comprise the detection and/or identification of at least one of traffic signs, road conditions, weather conditions and traffic situations, and wherein
    optionally the system being arranged for alerting a user or performing an action, such as a speed correction, an evasive maneuver, a halting of the vehicle, and/or issuing an alert in response to the images from said at least one camera.

Fig. 1

Europäisches
Patentamt

European
Patent Office

Office européen
des brevets

# EUROPEAN SEARCH REPORT

Application Number

EP 23 16 5823

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ARTHUR DOUILLARD ET AL: "DyTox: Transformers for Continual Learning with DYnamic TOken eXpansion", ARXIV.ORG, CORNELL UNIVERSITY LIBRARY, 201 OLIN LIBRARY CORNELL UNIVERSITY ITHACA, NY 14853, 27 March 2022 (2022-03-27), XP091192355, | 1,2,4-11 | INV. G06N3/045 G06N3/0895 G06N3/096 |
| Y | * page 1 - page 5 * <br> * figures 2, 3 * <br> * Algorithm 1 * | 3,12 | |
| Y | JEHANZEB MIRZA M ET AL: "An Efficient Domain-Incremental Learning Approach to Drive in All Weather Conditions", ARXIV.ORG, CORNELL UNIVERSITY LIBRARY, 201 OLIN LIBRARY CORNELL UNIVERSITY ITHACA, NY 14853, 19 April 2022 (2022-04-19), XP091206438, * abstract * * page 1 - page 6 * * figures 1, 2 * | 3,12 | |
| A | ELAHE ARANI ET AL: "Learning Fast, Learning Slow: A General Continual Learning Method based on Complementary Learning System", ARXIV.ORG, CORNELL UNIVERSITY LIBRARY, 201 OLIN LIBRARY CORNELL UNIVERSITY ITHACA, NY 14853, 10 May 2022 (2022-05-10), XP091217140, * abstract * * 1, 3 * | 1-12 | TECHNICAL FIELDS SEARCHED (IPC) <br> G06N |

-/--

The present search report has been drawn up for all claims

| Place of search | Date of completion of the search | Examiner |
|---|---|---|
| The Hague | 16 February 2024 | Keresztury, Bence |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

Europäisches
Patentamt

European
Patent Office

Office européen
des brevets

## EUROPEAN SEARCH REPORT

Application Number

EP 23 16 5823

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | PRASHANT BHAT ET AL: "Task-Aware Information Routing from Common Representation Space in Lifelong Learning", ARXIV.ORG, CORNELL UNIVERSITY LIBRARY, 201 OLIN LIBRARY CORNELL UNIVERSITY ITHACA, NY 14853, 14 February 2023 (2023-02-14), XP091443867, * the whole document * | 1-12 | |

-----

|  |  |  | TECHNICAL FIELDS SEARCHED (IPC) |
|---|---|---|---|

The present search report has been drawn up for all claims

| Place of search | Date of completion of the search | Examiner |
|---|---|---|
| The Hague | 16 February 2024 | Keresztury, Bence |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

& : member of the same patent family, corresponding
  document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 10745521, Zonooz, Bahram, Fahad Sarfraz, and Elahe Arani
- US 38212122, Arani, Elahe, Fahad Sarfraz, and Bahram Zonooz

### Non-patent literature cited in the description

- **PARISI, GERMAN I. et al.** Continual lifelong learning with neural networks: A review. *Neural Networks,* 2019, vol. 113, 54-71
- Catastrophic interference in connectionist networks: The sequential learning problem. **MICHAEL MCCLOSKEY ; NEAL J COHEN.** Psychology of learning and motivation. Elsevier, 1989, vol. 24, 109-165
- **ARANI, ELAHE ; FAHAD SARFRAZ ; BAHRAM ZONOOZ.** Learning Fast, Learning Slow: A General Continual Learning Method based on Complementary Learning System. *International Conference on Learning Representations*
- **BUZZEGA, PIETRO ; MATTEO BOSCHINI ; ANGELO PORRELLO ; DAVIDE ABATI ; SIMONE CALDERARA.** Dark experience for general continual learning: a strong, simple baseline. *Advances in neural information processing systems,* 2020, vol. 33, 15920-15930
- **BHAT, PRASHANT SHIVARAM ; BAHRAM ZONOOZ ; ELAHE ARANI.** Consistency is the key to further mitigating catastrophic forgetting in continual learning. *Conference on Lifelong Learning Agents,* 2022, 1195-1212
- **GURBUZ, MUSTAFA B. ; CONSTANTINE DOVROLIS.** NISPA: Neuro-Inspired Stability-Plasticity Adaptation for Continual Learning in Sparse Networks. *International Conference on Machine Learning,* 2022, 8157-8174
- **BHAT, PRASHANT SHIVARAM ; BAHRAM ZONOOZ ; ELAHE ARANI.** Task Agnostic Representation Consolidation: a Self-supervised based Continual Learning Approach. *Conference on Lifelong Learning Agents,* 2022, 390-405
- **SARFRAZ, FAHAD ; ELAHE ARANI ; BAHRAM ZONOOZ.** SYNERgy between SYNaptic consolidation and Experience Replay for general continual learning. *Conference on Lifelong Learning Agents,* 2022, 920-936
- **RATCLIFF, ROGER.** Connectionist models of recognition memory: constraints imposed by learning and forgetting functions. *Psychological review,* 1990, vol. 97.2, 285
- **VAN DE VEN, GIDO M. ; ANDREAS S. TOLIAS.** Three scenarios for continual learning. *arXiv preprint arXiv:1904.07734,* 2019
- **KIM, GYUHAK ; CHANGNAN XIAO ; TATSUYA KONISHI ; ZIXUAN KE ; BING LIU.** A Theoretical Study on Solving Continual Learning. *Advances in Neural Information Processing Systems*
- **GOLKAR, SIAVASH ; MICHEAL KAGAN ; KYUNGHYUN CHO.** Continual Learning via Neural Pruning. *Real Neurons {\&} Hidden Units: Future directions at the intersection of neuroscience and artificial intelligence@ NeurIPS,* 2019
- **MALLYA, ARUN ; SVETLANA LAZEBNIK.** Packnet: Adding multiple tasks to a single network by iterative pruning. *Proceedings of the IEEE conference on Computer Vision and Pattern Recognition,* 2018, 7765-7773
- **WANG, ZHEN ; LIU LIU ; YIQUN DUAN ; DACHENG TAO.** Continual learning through retrieval and imagination. *AAAI Conference on Artificial Intelligence,* 2022, vol. 8
- **RUSU, ANDREI A. ; NEIL C. RABINOWITZ ; GUILLAUME DESJARDINS ; HUBERT SOYER ; JAMES KIRKPATRICK ; KORAY KAVUKCUOGLU ; RAZVAN PASCANU ; RAIA HADSELL.** Progressive Neural Networks. *arXiv e-prints (2016): arXiv-1606,* 2016
- **CACCIA, LUCAS ; RAHAF ALJUNDI ; NADER ASADI ; TINNE TUYTELAARS ; JOELLE PINEAU ; EUGENE BELILOVSKY.** New insights on reducing abrupt representation change in online continual learning. *arXiv preprint arXiv:2203.03798,* 2022
- **TIWARI, RISHABH ; KRISHNATEJA KILLAMSETTY ; RISHABH IYER ; PRADEEP SHENOY.** GCR: Gradient Coreset Based Replay Buffer Selection For Continual Learning. *Proceedings of the IEEE/CVF Conference on Computer Vision and Pattern Recognition,* 2022, 99-108
- **CHA, HYUNTAK ; JAEHO LEE ; JINWOO SHIN.** Co2l: Contrastive continual learning. *Proceedings of the IEEE/CVF International Conference on Computer Vision,* 2021, 9516-9525

- **HUNG, CHING-YI ; CHENG-HAO TU ; CHENG-EN WU ; CHIEN-HUNG CHEN ; YI-MING CHAN ; CHU-SONG CHEN.** Compacting, picking and growing for unforgetting continual learning. *Advances in Neural Information Processing Systems,* 2019, vol. 32
- **VITTER, JEFFREY S.** Random sampling with a reservoir. *ACM Transactions on Mathematical Software (TOMS),* 1985, vol. 11.1, 37-57
- **DOUILLARD, ARTHUR ; ALEXANDRE RAMÉ ; GUILLAUME COUAIRON ; MATTHIEU CORD.** Dytox: Transformers for continual learning with dynamic token expansion. *Proceedings of the IEEE/CVF Conference on Computer Vision and Pattern Recognition,* 2022, 9285-9295
- **SERRA, JOAN ; DIDAC SURIS ; MARIUS MIRON ; ALEXANDROS KARATZOGLOU.** Overcoming catastrophic forgetting with hard attention to the task. *International Conference on Machine Learning,* 2018, 4548-4557
- **GOWDA, S. ; ZONOOZ, B. ; ARANI, E.** InBiaseD: Inductive Bias Distillation to Improve Generalization and Robustness through Shape-awareness. *Proceedings of The 1st Conference on Lifelong Learning Agents, in Proceedings of Machine Learning Researc,* 2022, vol. 199, 1026-1042
- **BHAT, PRASHANT ; ELAHE ARANI ; BAHRAM ZONOOZ.** Distill on the Go: Online knowledge distillation in self-supervised learning. *Proceedings of the IEEE/CVF Conference on Computer Vision and Pattern Recognition,* 2021, 2678-2687
- **SARFRAZ, FAHAD ; ELAHE ARANI ; BAHRAM ZONOOZ.** Sparse Coding in a Dual Memory System for Lifelong Learning. *arXiv preprint arXiv:2301.05058,* 2022
- **VARMA, ARNAV ; ELAHE ARANI ; BAHRAM ZONOOZ.** Dynamically Modular and Sparse General Continual Learning. *arXiv preprint arXiv:2301.00620,* 2023
- **GOWDA, SHRUTHI ; BAHRAM ZONOOZ ; ELAHE ARANI.** Does Thermal data make the detection systems more reliable?. *arXiv preprint arXiv:2111.05191,* 2021
- **PRASHANT SHIVARAM BHAT ; BAHRAM ZONOOZ ; ELAHE ARANI.** Task-Aware Information Routing from Common Representation Space in Lifelong Learning. *The Eleventh International Conference on Learning Representations,* 2023